# FASCICULE DE BREVET EUROPEEN

(11) **EP 0 879 739 B1**
(45) Date de publication et mention de la délivrance du brevet: **07.08.2002**
(21) Numéro de dépôt: 98401175.9
(22) Date de dépôt: 15.05.1998
(51) Int. Cl.: B60R 21/26

(54) **Générateur pyrotechnique de gaz adaptatif à chambres tubulaires pour coussin de protection**
Adaptativer, pyrotechnischer Gasgenerator mit rohrförmigen Kammern für einen Airbag
Adaptive pyrotechnic gas generator with tubular chambers for an airbag

(30) Priorité: 23.05.1997 FR 9706324
(43) Date de publication de la demande: 25.11.1998
(73) Titulaire: LIVBAG S.N.C., 91710 Vert Le Petit (FR)
(72) Inventeur: Lebaudy, Franck, 91510 Lardy (FR); Perotto, Christian, 91610 Ballancourt (FR)
(74) Mandataire: Pech, Bernard

(56) Documents cités:
- EP-A- 0 773 145
- WO-A-97/16695
- DE-A- 19 541 583
- US-A- 3 773 352
- US-A- 3 972 545

## Description

L'invention se rapporte au domaine de la sécurité automobile et concerne plus particulièrement des générateurs pyrotechniques de gaz pour gonfler des coussins de protection.

De nouveaux générateurs, dits adaptatifs, sont apparus depuis peu afin de limiter les risques d'accidents corporels occasionnés par le déploiement du coussin de protection dans des conditions exceptionnelles. Ces générateurs, associés à des systèmes de détection idoines, permettent de moduler le débit de gaz en fonction de différents paramètres comme par exemple la température ambiante, la nature et l'intensité du choc, la morphologie et le positionnement du passager. Pour constituer des générateurs "adaptatifs", on peut employer, d'une part, les générateurs de type hybride, c'est-à-dire les générateurs dont les gaz destinés à gonfler le coussin sont constitués par le mélange des gaz provenant de la combustion du chargement pyrotechnique et- de ceux stockés dans un réservoir sous pression, et d'autre part, les générateurs dont la seule combustion du ou des chargements pyrotechniques permet de déployer le coussin. Le brevet US 972 545 décrit un générateur pour "passager" tel que décrit dans le préambule de la revendication 1, et qui comprend deux chambres de combustion munies chacune d'un chargement pyrotechnique et d'un initiateur, les deux chambres étant séparées par une cloison consumable. Selon l'intensité du choc, le déclenchement des deux initiateurs reliés à une unique alimentation électrique peut se produire de façon décalée. Lorsqu'un signal électrique de faible voltage est émis, seule une chambre est allumée à l'aide de l'initiateur qu'elle contient, la seconde étant mise à feu lorsque la cloison séparant les deux chambres est consumée. En revanche, lorsqu'un signal de haut voltage est émis, les deux initiateurs sont activés simultanément, entraînant ainsi un allumage simultané des deux chambres de combustion. Il en découle donc que le volume de gaz libéré dans le coussin est constant et assure un gonflage maximal du coussin en toutes circonstances.

La demande de brevet EP 609 981 définit un générateur de gaz pour "conducteur" qui permet de faire varier la durée de combustion du chargement pyrotechnique par l'intermédiaire de deux initiateurs pouvant être mis à feu successivement ou simultanément. Mais, d'une part, l'utilisation de deux initiateurs indépendants et séparés nécessite des alimentations électriques elles aussi séparées augmentant ainsi les coûts et les encombrements et, d'autre part, le volume de gaz généré est constant en toutes circonstances.

La demande de brevet EP 0 382 552 divulgue un générateur plus spécialement conçu pour protéger un passager. Ce générateur est constitué par une pièce cylindrique monobloc divisée en deux parties par une cloison interne et présente deux chambres de combustion contenant chacune un chargement pyrotechnique et un initiateur, chaque initiateur étant relié à une alimentation électrique distincte. En fonctionnement, les deux chambres sont allumées de façon décalée dans le temps afin d'optimiser le débit de gaz et donc le niveau de pression obtenu dans le coussin.

Ainsi, ces générateurs, qui permettent de moduler la vitesse de gonflage du coussin, ne peuvent pas réduire, selon les circonstances, le volume de gaz final libéré dans le coussin. De plus, le procédé de fabrication relativement complexe de ces générateurs, et le cas échéant, l'emploi d'alimentations électriques séparées, rendent difficile la transposition de telles technologies pour des générateurs à faible coût et à faible encombrement.

L'homme du métier est donc à la recherche d'un générateur pyrotechnique de gaz dont la fabrication est aisée et d'un coût peu élevé permettant, selon la situation, soit de ne libérer qu'un certain volume de gaz et donc de ne gonfler le coussin que partiellement, soit de libérer un volume de gaz maximal afin de gonfler totalement le coussin avec la possibilité de réguler la vitesse de gonflage.

L'invention concerne donc un générateur pyrotechnique de gaz destiné à la sécurité automobile comportant notamment un boîtier cylindrique comprenant une paroi latérale, dont l'une des deux extrémités est fermée par une bague de fermeture, et un dispositif électrique d'allumage comportant deux têtes distinctes d'allumage, caractérisé en ce que ,
i) une plaque transversale comportant des orifices initialement obturés divise ledit boîtier en une partie amont et une partie aval,
ii) le boîtier contient dans sa partie amont un tube permettant de séparer de façon étanche une chambre de combustion principale d'une chambre de combustion auxiliaire, les deux chambres contenant chacune un chargement pyrotechnique et une tête d'allumage,
iii) la partie aval du boîtier est munie d'évents d'évacuation des gaz de combustion.

Selon un mode de réalisation particulier, le boîtier peut être constitué par un tube dont l'une des deux extrémités est fermée par une bague de fermeture et dont l'autre extrémité est fermée par une pièce rapportée.

Avantageusement, l'axe de révolution du tube est parallèle et décalé par rapport à celui du boîtier, ce tube pouvant être recouvert par une protection thermique et/ou comporter des aménagements afin d'obtenir une sécurité totale au niveau de l'étanchéité et ainsi éviter toute mise à feu par transfert thermique en l'absence du déclenchement des deux têtes d'allumage.

Selon une première caractéristique de l'invention, un ensemble de sécurité permet d'isoler chacune des deux chambres de combustion des gaz issus de l'autre chambre de combustion. Préférentiellement, l'ensemble de sécurité est constitué par une pièce discoïde qui comporte des zones prédécoupées et qui est logée dans la partie aval de manière à ce que chacun des orifices portés par la plaque transversale soit recouvert par l'une des zones prédécoupées. Il est également possible de constituer un ensemble de sécurité en obturant chaque orifice par un clip inséré dans des rainures convergentes réalisées de part et d'autre de chaque orifice. Cet ensemble de sécurité permet ainsi :
- soit de ne libérer qu'un volume de gaz limité en n'initiant qu'un seul des deux chargements pyrotechniques,
- soit de gonfler totalement le coussin de protection en initiant les deux chargements, une initiation décalée dans le temps permettant de moduler la vitesse de gonflage.

Selon une deuxième caractéristique de l'invention, une membrane recouvre la plaque transversale dans la partie amont du boîtier. Cette membrane obture donc les orifices portés par la plaque transversale et fait office d'opercules claquables.

Selon une troisième caractéristique de l'invention, le dispositif électrique d'allumage est constitué par un initiateur à double tête, ledit initiateur ne comportant qu'une seule alimentation électrique.

Selon une première variante préférée, chacune des deux têtes présente une résistance distincte incorporée à un pont de commutation. Ce dernier est composé de quatre interrupteurs pouvant basculer par couple combinés à un circuit d'aiguillage réalisé par un circuit à diodes. Ce système permet alors, par fermeture du ou des couples d'interrupteurs adéquats, soit de n'allumer qu'une seule chambre de combustion au choix, soit d'allumer les deux chambres selon un décalage programmé dans le temps.

Préférentiellement, les interrupteurs sont inclus dans un boîtier électronique de commande qui est relié, à l'aide de l'unique alimentation électrique se terminant par deux broches de connexion, à une platine d'allumage comportant les résistances et les diodes, lesdites broches, résistances et diodes étant intégrées dans un circuit imprimé. En fonction de la géométrie de la platine d'allumage, qui peut être notamment circulaire, annulaire ou encore rectangulaire, il est alors nécessaire d'employer un circuit imprimé souple ou rigide. Avantageusement, les quatre interrupteurs sont constitués par des transistors susceptibles d'être incorporés dans un module unique.

Selon une seconde variante préférée, chacune des deux têtes présente une résistance de valeur différente. Les deux têtes étant initiées par un même courant électrique, il est ainsi possible, en fonction des résistances employées et de l'intensité du courant délivré par un boîtier électronique de commande, soit de déclencher uniquement l'une des deux chambres, soit de déclencher les deux chambres de combustion simultanément ou successivement.

Préférentiellement, le chargement pyrotechnique est constitué par un propergol solide se présentant sous forme de pastilles ou sous forme de bloc, à base de propergol composite ou de propergol à double base ou encore de propergol à base d'azoture de sodium. La quantité de propergol solide dans chaque chambre peut être identique ou différente.

Les principaux avantages de ce générateur par rapport à ceux existant sont les suivants :
- Ce générateur peut être employé pour gonfler des coussins de protection aussi bien "conducteur" que "passager". Il suffit pour cela d'adapter la longueur de la paroi latérale du boîtier et celle du tube interne à la masse de propergol nécessaire au gonflage du coussin.
- Ce générateur permet un coût de fabrication plus faible, d'une part en raison de l'utilisation de tubes au lieu de pièces usinées ou forgées et de l'utilisation d'un initiateur à double tête muni d'une seule alimentation électrique au lieu de deux initiateurs comportant deux circuits indépendants, et, d'autre part, en raison d'un assemblage simple ne nécessitant que deux sertissages annulaires, l'un au niveau de la plaque transversale, l'autre au niveau de la bague de fermeture.

On donne ci-après une description détaillée du mode préféré de réalisation en se référant aux figures 1 à 5.

La figure 1 est une vue en coupe longitudinale d'un générateur selon l'invention.

La figure 2 est une vue partielle en perspective du générateur représenté à la figure 1.

La figure 3 est une vue de la face inférieure de la platine d'allumage du générateur représenté aux figures 1 et 2.

La figure 4 est une vue de face, selon la coupe IV-IV, de la platine d'allumage représentée à la figure 3.

La figure 5 est un schéma électrique du dispositif électrique d'allumage du générateur représenté aux figures 1 et 2.

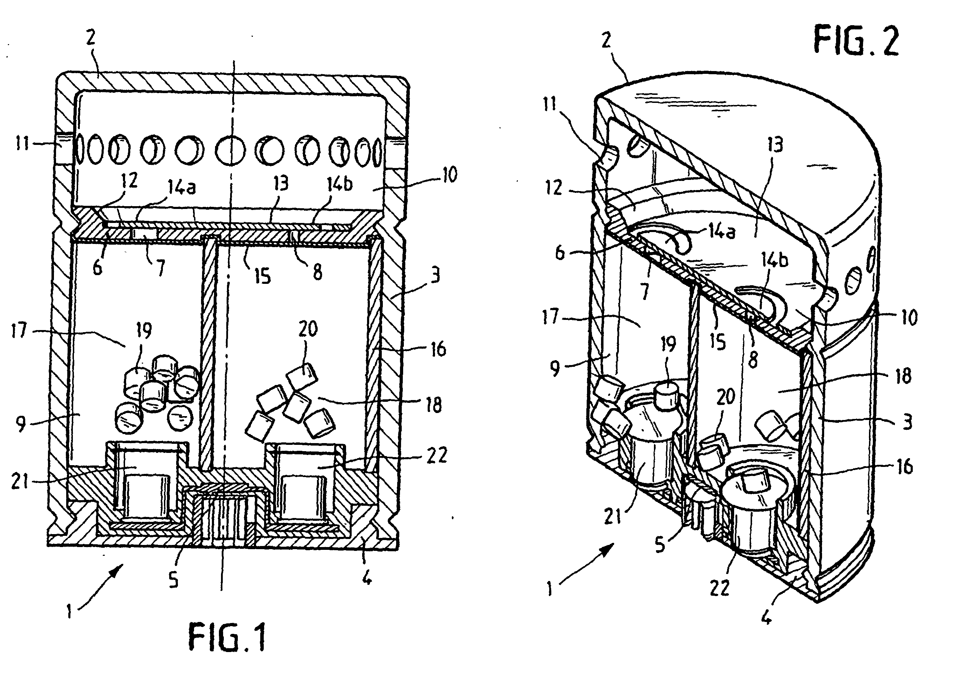

En se reportant aux figures 1 et 2, on observe qu'un générateur pyrotechnique de gaz 1 comporte un boîtier 2 cylindrique monobloc constitué par un métal suffisamment ductile pour pouvoir être serti, c'est-à-dire un métal dont la capacité d'allongement et la résistance à la rupture sont respectivement supérieures à 20% et à 400MPa. Ce boîtier 2 comprend une paroi latérale 3 qui présente une extrémité fermée et, à l'opposé, une extrémité ouverte dans laquelle est sertie une bague de fermeture 4 servant de support à un dispositif électrique d'allumage 5. Une plaque 6 transversale comportant deux orifices 7, 8 est sertie dans la paroi latérale 3 interne du boîtier 2 et divise ce dernier en une partie amont 9 et une partie aval 10, la paroi latérale 3 située dans ladite partie aval 10 étant munie d'évents 11 d'évacuation des gaz de combustion. Cette plaque 6 transversale possède, dans la partie aval 10, une face présentant un évidement 12 dans lequel est logée une pièce discoïde 13 comportant deux zones prédécoupées 14a, 14b. Ces dernières sont positionnées de manière à ce que chacun des orifices 7, 8 portés par ladite plaque 6 soit recouvert par l'une des zones prédécoupées 14a, 14b. Une membrane 15 métallique, dont la bordure est pincée entre la paroi latérale 3 et la plaque 6 au niveau du sertissage, recouvre ladite plaque 6 dans la partie amont 9 et obture ainsi les orifices 7, 8. Le boîtier 2, dans la partie amont 9, contient un tube 16 cylindrique présentant d'une part, une première extrémité insérée dans une rainure du dispositif électrique d'allumage 5, et d'autre part, une seconde extrémité en contact avec la membrane 15 et insérée dans une rainure de la plaque 6. L'axe de révolution du tube 16, qui est parallèle à l'axe de révolution du boîtier 2, n'est pas confondu avec ce dernier, et ledit tube 16 sépare ainsi de façon étanche une chambre de combustion principale 17 d'une chambre de combustion auxiliaire 18. Ces deux chambres 17, 18 contiennent respectivement un chargement pyrotechnique 19, 20 constitué par un propergol solide sous forme de pastilles qui est à base de propergol composite comportant un liant, un oxydant et des additifs, la quantité de propergol solide contenu dans la chambre principale 17 étant plus importante que celle contenue dans le chambre auxiliaire 18.

En se référant aux figures 1 à 5, on observe que le dispositif électrique d'allumage 5 est réalisé à l'aide d'un initiateur à double tête 21, 22 qui est alimenté au moyen d'un seul circuit électrique provenant d'un boîtier électronique de commande. Les têtes 21, 22 sont respectivement logées dans la chambre principale 17 et la chambre auxiliaire 18, et chaque tête 21, 22 comporte une résistance distincte A₁, A₂. Celles-ci sont incorporées à un pont de commutation comprenant quatre interrupteurs Q₁ à Q₄, inclus dans le boîtier électronique de commande, qui peuvent basculer par couple et qui sont combinés à un circuit à diodes D₁, D₂.

Comme présenté sur la figure 5, chaque paire d'interrupteurs Q₁, Q₄ et Q₂, Q₃ est montée entre une tension de mise à feu Va et la masse électrique du circuit Vo. Le circuit électrique issu du boîtier électronique de commande est relié au dispositif électrique d'allumage 5 par l'intermédiaire de deux broches P₁, P₂ qui sont connectées vers un ensemble d'initiation I₁ composé d'une part, des résistances A₁, A₂, et d'autre part, des diodes D₁, D₂ qui leur sont associées et qui isolent l'une des deux résistances A₁, A₂ suivant la polarité de la tension Vr de mise à feu appliquée entre les broches P₁, P₂.

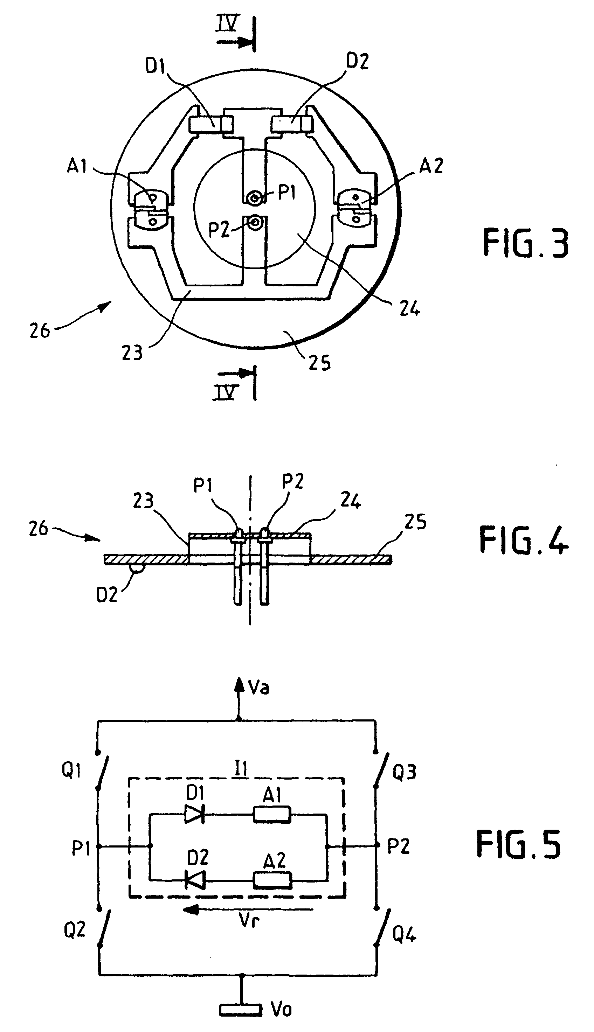

En se référant aux figures 3 et 4, on observe que les broches P₁, P₂, les résistances A₁, A₂ et les diodes D₁, D₂ sont montées sur un circuit imprimé 23 souple reliant un support 24 discoïde à une plaquette 25 annulaire, ledit support 24 et ladite plaquette 25 étant situés dans des plans parallèles et décalés, et formant, avec le circuit imprimé 23, une platine d'allumage 26. Les broches P₁, P₂ de connexion sont encastrées dans le support 24 et les résistances A₁, A₂ ainsi que les diodes D₁, D₂ sont montées sur la plaquette 25. Ce montage permet ainsi de diminuer la hauteur de l'initiateur 5 et donc celle du générateur 1 puisque la connexion entre le circuit électrique et le générateur 1 est partiellement incrustée dans ledit initiateur 5.

Avantageusement, les interrupteurs Q₁ à Q₄ inclus dans le boîtier électronique de commande sont constitués par des transistors susceptibles d'être transposés dans un module unique.

Ce générateur 1, associé à un boîtier électronique de commande à fonctions multiples, permet les schémas de fonctionnement suivants. Selon les circonstances de l'accident, le boîtier électronique de commande est amené à ne déclencher qu'une seule des deux têtes 21, 22 au choix, ou bien, si nécessaire, à déclencher les deux têtes 21, 22 de façon décalée dans le temps.

Dans le premier cas, la tête de l'initiateur 5 qui est choisie est celle dont le chargement pyrotechnique qui lui est associé va générer le volume de gaz le mieux adapté à la situation. A titre d'exemple, si le couple d'interrupteurs Q₁, Q₄ est fermé et si le couple d'interrupteurs Q₂, Q₃ reste ouvert, la polarité de la tension Vr est alors positive et la diode D₁ passante. Par suite, la résistance A₁ est soumise au courant électrique et la tête 21 de la chambre principale 17 est mise à feu. En revanche, la diode D₂ est bloquée et donc la résistance A₂ n'est pas soumise au courant électrique. Les gaz de combustion qui sont générés par la tête 21 viennent alors au contact des pastilles 19 et entraînent l'allumage desdites pastilles 19. Lorsque la pression atteint la valeur de rupture de la membrane 15 qui obture l'orifice 7, ladite membrane 15 se rompt au voisinage de ce dernier et les gaz exercent alors une pression sur la zone prédécoupée 14a qui recouvre l'orifice 7, ce qui entraîne une pliure de celle-ci dans le sens du flux de gaz. Les gaz pénètrent ensuite dans la partie aval 10 du boîtier 2 pour finalement s'échapper par les évents 11 d'évacuation des gaz de combustion et gonfler le coussin de protection. La pièce 13 discoïde, dont la zone prédécoupée 14b recouvre l'orifice 8, permet alors d'éviter que les gaz chauds qui sont générés par la combustion des pastilles 19 ne viennent rompre la membrane 15 au voisinage de l'orifice 8 et par conséquence provoquer l'allumage des pastilles 20. Le fonctionnement est similaire lorsque le boîtier électronique de commande déclenche uniquement la tête 22 de l'initiateur 5 par fermeture du couple d'interrupteurs Q₂, Q₃.

Dans le second cas, les deux têtes 21, 22 sont mises à feu à des instants différents en fermant tout d'abord le premier couple d'interrupteurs, par exemple comme précédemment le couple Q₁, Q₄, puis en fermant le second couple Q₂, Q₃. La tête 21 est mise au feu comme précédemment décrit puis la tête 22 est alors initiée à la suite de la tête 21 selon un retard programmé. Les pastilles 20 sont ainsi allumées et, lorsque la pression atteint une valeur seuil, la membrane 15 se rompt au voisinage de l'orifice 8. Les gaz générés exercent alors une pression sur la zone prédécoupée 14b qui recouvre l'orifice 8, ce qui entraîne une pliure de cette dernière dans le sens du flux de gaz. Les gaz pénètrent ainsi dans la partie aval 10 du boîtier 2 pour, en définitive, gonfler le coussin de protection. Il est à noter que le temps de réponse d'une diode étant de l'ordre de 1 à 2 millisecondes, les deux têtes 21, 22 peuvent être initiées de façon quasi-simultanée.

## Revendications

1. Générateur pyrotechnique de gaz (1) destiné à la sécurité automobile comportant un boîtier (2) cylindrique comprenant une paroi latérale (3), dont l'une des deux extrémités est fermée par une bague de fermeture (4), un dispositif électrique d'allumage (5) comportant deux têtes distinctes d'allumage (21. 22), une plaque transversale (6) comportant des orifices (7, 8) qui divise le boîtier (2) en une partie amont (9) et une partie aval (10), et la partie aval (10) du boîtier (2) est munie d'évents (11) d'évacuation des gaz de combustion, **caractérisé en ce que**,
i) les orifices (7, 8) sont initialement obturés,
ii) le boîtier (2) contient dans sa partie amont (9) un tube (16) permettant de séparer de façon étanche une chambre de combustion principale (17) d'une chambre de combustion auxiliaire (18), les deux chambres de combustion (17, 18) contenant chacune un chargement pyrotechnique (19, 20) et une tête d'allumage (21, 22).

2. Générateur selon la revendication 1, **caractérisé en ce que** l'axe de révolution du tube (16) est parallèle et décalé par rapport à celui du boîtier (2).

3. Générateur selon la revendication 1, **caractérisé en ce qu'**un ensemble de sécurité permet d'isoler chacune des deux chambres de combustion (17, 18) des gaz issus de l'autre chambre de combustion.

4. Générateur selon la revendication 3, **caractérisé en ce que** l'ensemble de sécurité est constitué par une pièce (13) discoïde qui comporte des zones prédécoupées (14a, 14b) et qui est logée dans la partie aval (10) de manière à ce que chacun des orifices (7, 8) portés par la plaque (6) transversale soit recouvert par l'une des zones prédécoupées (14a, 14b).

5. Générateur selon la revendication 1, **caractérisé en ce qu'**une membrane (15) recouvre la plaque (6) transversale dans la partie amont (9) du boîtier (2).

6. Générateur selon la revendication 1, **caractérisé en ce que** le dispositif électrique d'allumage (5) est constitué par un initiateur à double tête (21, 22), ledit initiateur ne comportant qu'une seule alimentation électrique.

7. Générateur selon la revendication 6, **caractérisé en ce que** chacune des deux têtes (21, 22) présente une résistance distincte (A₁, A₂) incorporée à un pont de commutation comprenant quatre interrupteurs (Q₁ à Q₄) pouvant basculer par couple et combinés à un circuit d'aiguillage réalisé par un circuit à diodes (D₁, D₂).

8. Générateur selon la revendication 7, **caractérisé en ce que** les interrupteurs (Q₁ à Q₄) sont inclus dans un boîtier électronique de commande qui est relié, à l'aide de l'unique alimentation électrique se terminant par deux broches (P₁, P₂) de connexion, à une platine d'allumage (26) comportant les résistances (A₁, A₂) et les diodes (D₁, D₂), lesdites broches (P₁, P₂), résistances (A₁, A₂) et diodes (D₁, D₂) étant intégrées dans un circuit imprimé (23).

9. Générateur selon l'une quelconque des revendications 7 ou 8, **caractérisé en ce que** les quatre interrupteurs (Q₁ à Q₄) sont constitués par des transistors susceptibles d'être incorporés dans un module unique.

10. Générateur selon la revendication 6, **caractérisé en ce que** chacune des deux têtes (21, 22) présente une résistance de valeur différente.

## Patentansprüche

1. Pyrotechnischer Gasgenerator (1) für die Kraftfahrzeugsicherheit, der ein zylindrisches Gehäuse (2) mit einer Seitenwand (3), die an einem ihrer beiden Enden von einem Schließring (4) verschlossen wird, einer elektrischen Zündvorrichtung (5) mit zwei getrennten Zündköpfen (21, 22) und einer Querplatte (6) mit Öffnungen (7, 8) aufweist, die das Gehäuse (2) in einen vorderen (9) und einen hinteren Bereich (10) aufteilt, und der hintere Bereich (10) des Gehäuses (2) mit Lüftungsöffnungen (11) für die Evakuierung der Verbrennungsgase versehen ist, **dadurch gekennzeichnet, daß**
i) die Öffnungen (7, 8) ursprünglich verschlossen sind,
ii) das Gehäuse (2) in seinem vorderen Bereich (9) ein Rohr (16) aufweist, daß es ermöglicht, eine Hauptbrennkammer (17) dicht von einer Hilfsbrennkammer (18) zu trennen, wobei die beiden Brennkammern (17, 18) je eine pyrotechnische Ladung (19, 20) und einen Zündkopf (21, 22) enthalten.

2. Generator nach Anspruch 1, **dadurch gekennzeichnet, daß** die Drehachse des Rohrs (16) zur Achse des Gehäuses (2) parallel und verschoben liegt.

3. Generator nach Anspruch 1, **dadurch gekennzeichnet, daß** eine Sicherheitseinheit es ermöglicht, jede der beiden Brennkammern (17, 18) von den Gasen zu isolieren, die aus der anderen Brennkammer kommen.

4. Generator nach Anspruch 3, **dadurch gekennzeichnet, daß** die Sicherheitseinheit aus einem diskusförmigen Teil (13) besteht, das vorausgeschnittene Zonen (14a, 14b) aufweist und das im hinteren Bereich (10) derart angeordnet ist, daß jede der Öffnungen (7, 8) der Querplatte (6) von einer der vorausgeschnittenen Zonen (14a, 14b) bedeckt wird.

5. Generator nach Anspruch 1, **dadurch gekennzeichnet, daß** eine Membran (15) die Querplatte (6) im vorderen Bereich (9) des Gehäuses (2) bedeckt.

6. Generator nach Anspruch 1, **dadurch gekennzeichnet, daß** die elektrische Zündvorrichtung (5) aus einem doppelköpfigen (21, 22) Initialzünder besteht, der nur eine einzige Stromversorgung aufweist.

7. Generator nach Anspruch 6, **dadurch gekennzeichnet, daß** jeder der beiden Köpfe (21, 22) einen eigenen Widerstand (A₁, A₂) aufweist, der in eine Schaltbrücke integriert ist, welche vier Schalter (Q₁ bis Q₄) enthält, die paarweise kippen können und mit einer Weichenschaltung verbunden sind, die aus einer Diodenschaltung (D₁, D₂) besteht.

8. Generator nach Anspruch 7, **dadurch gekennzeichnet, daß** die Schalter (Q₁ bis Q₄) in ein elektronisches Steuergehäuse integriert sind, das mit Hilfe der einzigen Stromversorgung, die in zwei Anschlußstiften (P₁, P₂) endet, mit einer Zündplatine (26) verbunden ist, die die Widerstände (A₁, A₂) und die Dioden (D₁, D₂) enthält, wobei die Stifte (P₁, P₂), Widerstände (A₁, A₂) und Dioden (D₁, D₂) in eine Druckschaltung (23) integriert sind.

9. Generator nach einem der Ansprüche 7 oder 8, **dadurch gekennzeichnet, daß** die vier Schalter (Q₁ bis Q₄) aus Transistoren bestehen, die in einen einzigen Modul integriert sein können.

10. Generator nach Anspruch 6, **dadurch gekennzeichnet, daß** jeder der beiden Köpfe (21, 22) einen Widerstand mit anderem Wert aufweist.

## Claims

1. Pyrotechnic gas generator (1) designed for motor vehicle safety comprising a cylindrical case (2) comprising a lateral wall (3), one of the ends of which is closed by a closure ring (4), an electric ignition device (5) comprising two separate ignition heads (21, 22), a transverse plate (6) comprising openings (7,8) which divides the case (2) into an upstream part (9) and a downstream part (10), and the upstream part (10) of the case (2) is provided with vents (11) for discharge of the combustion gases, **characterised in that**:
i) the openings (7,8) are initially closed;
ii) the case (2) contains in its upstream part (9) a tube (16) which makes it possible to separate a main combustion chamber (17) in a sealed manner from an auxiliary combustion chamber (18), the two combustion chambers (17,18) each containing a pyrotechnic charge (19,20) and an ignition head (21,22).

2. Generator according to claim 1, **characterised in that** the axis of revolution of the tube (16) is parallel and offset relative to that of the case (2).

3. Generator according to claim 1, **characterised in that** a safety assembly makes it possible to isolate each of the two combustion chambers (17,18) from the gases obtained from the other combustion chamber.

4. Generator according to claim 3, **characterised in that** the safety assembly consists of a discoid part (13) which comprises pre-cut areas (14a, 14b) and is accommodated in the downstream part (10) such that each of the openings (7,8) contained in the transverse plate (6) is covered by one of the pre-cut areas (14a,14b).

5. Generator according to claim 1, **characterised in that** a diaphragm (15) covers the transverse plate (6) in the upstream part of the case (2).

6. Generator according to claim 1, **characterised in that** the electric ignition device (5) consists of a double-head initiator (21,22), the said initiator comprising only a single electrical supply.

7. Generator according to claim 6, **characterised in that** each of the two heads (21,22) has a separate resistor (A₁,A₂) incorporated in a switching bridge comprising four switches (Q₁ to Q₄) which can switch in pairs and are combined with a switching circuit produced by a diode circuit (D₁, D₂).

8. Generator according to claim 7, **characterised in that** the switches (Q₁ to Q₄) are included in an electronic control box which is connected by means of the sole electrical supply which ends in two connection pins (P₁, P₂), to an ignition plate (26) comprising the resistors (A₁, A₂) and the diodes (D₁, D₂), the said pins (P₁, P₂), resistors (A₁, A₂) and diodes (D₁, D₂) being integrated in a printed circuit (23).

9. Generator according to claim 7 or claim 8, **characterised in that** the four switches (Q₁ to Q₄) consist of transistors which can be incorporated in a single module.

10. Generator according to claim 6, **characterised in that** each of the two heads (21, 22) has a different resistance value.
